# EUROPÄISCHE PATENTSCHRIFT

(11) **EP 0 812 338 B1**
(45) Veröffentlichungstag und Bekanntmachung des Hinweises auf die Patenterteilung: **23.04.2003**
(21) Anmeldenummer: 95940934.3
(22) Anmeldetag: 27.12.1995
(51) Int. Cl.: C08G 69/28, C08G 69/46, C08J 3/00, C08J 5/00

(54) **VERFAHREN ZUM NACHKONDENSIEREN VON POLYKONDENSATEN, INSBESONDERE VON POLYAMID 6.6**
PROCESS FOR SUBSEQUENT CONDENSATION OF POLYCONDENSATES, IN PARTICULAR OF POLYAMIDE 6.6
PROCEDE DE CONDENSATION SUBSEQUENTE DE POLYCONDENSATS, NOTAMMENT DE POLYAMIDE 6.6

(43) Veröffentlichungstag der Anmeldung: 17.12.1997
(73) Patentinhaber: Rhodia Industrial Yarns AG, 6021 Emmenbrücke (CH)
(72) Erfinder: BERGER, Luzius, F-81380 Lescure d'Albigeois (FR); STEHR, Hans, CH-6043 Adligenswil (CH); ZEMP, Niklaus, F-81000 Albi (FR)
(74) Vertreter: Herrmann, Peter Johannes
(86) Internationale Anmeldenummer: CH9500307
(87) Internationale Veröffentlichungsnummer: WO97024389

(56) Entgegenhaltungen:
- EP-A- 0 092 898
- CH-A- 686 308

## Beschreibung

Die Erfindung betrifft ein Verfahren zum einstufigen Nachkondensieren von Polykondensaten, insbesondere von Polyamid 6.6 Granulat in einem Wirbelschichtreaktor unter Verwendung von Stickstoff (N₂) als Trägergas.

Zur Herstellung von Filamenten aus Polykondensaten für Industriegarne ist zur Einstellung des Polymerisationsgrades eine thermische Nachbehandlung in festem Zustand erforderlich, die allgemein unter der Bezeichnung Nachkondensation bekannt ist. Bei der Nachkondensation von Polyamid 66 wird gewöhnlich das Polyamid in Granulatform in der Wärme im Vakuum behandelt, oder das Granulat wird von einem Inertgas, in der Regel von trockenem Stickstoff durchströmt. Ein Teil des mit Feuchtigkeit und Verunreinigungen beladenen Inertgases wird nach dem Durchtritt durch das Granulatbett abgeblasen. Im Inertgaskreislauf befinden sich häufig Entfeuchtungsaggregate wie Tiefkühlfallen, Silikagel oder Molekularsiebe zum Trocknen des Polymers.

Alle bekannten Verfahren zur Nachkondensation von Polyamid 6.6 benötigen sehr lange Nachkondensationszeiten, in der Regel mehr als 20 Stunden.

Bei der Nachkondensation im festen Zustand wird in der Regel mit Granulat begonnen, welches nicht vollständig trocken ist. Die Einstellung der Feuchte in einem Polyamidgranulat durch Zugabe von Wasser ist bekannt. So wird im Verfahren nach der EP-A-0092898 in wenigsten zwei Stufen zunächst nachkondensiert und anschliessend in einer Konditionierungsphase eine geregelte Menge Wasser dem Polyamid unmittelbar vor dem Aufschmelzen dem Extruder zugeführt. Mit dem bekannten Verfahren soll der Wassergehalt im Polymer vor dem Extrudieren möglichst genau eingestellt werden. Die Zudosierung von Wasser auf das abgekühlte Granulat oder in den heissen Extruder hat jedoch die Nachteile, dass die Dosierung schwanken kann oder auch unerwünschte Temperaturschwankungen auftreten können. In der Regel gehen Teilströme vom Extruder auf mehrere Positionen, welche beispielsweise beim Spinndüsenwechsel unterbrochen werden müssen, so dass die Dosierung von Wasser in aufwendiger Weise angepasst werden müsste. Sowohl die manuelle Zugabe als auch die Dosierung mit einer Pumpe ist zu ungenau, wenn Schwankungen im resultierenden Filament vermieden werden sollen.

Aufgabe der Erfindung ist es, das aus dem vorgelegten Polymer enthaltene Wasser, welches durch das Aufheizen des Granulats aus dem Polymer entweicht, auf einfache Weise abzuführen.

Eine weitere Aufgabe besteht darin, entstehendes Reaktionswasser abzuführen.

Eine weitere Aufgabe besteht darin, dem abgekühlten Polymer einen bestimmten, vorgegebenen Feuchtegehalt zu geben. Durch die Erfindung kann damit auf eine Wasserzugabe vor dem Extruder verzichtet werden.

Eine weitere Aufgabe besteht darin, dass der Feuchtegehalt in weiteren Bereichen einstellbar ist.

Eine weitere Aufgabe besteht darin, die im Trägergas enthaltenen Monomere, Oligomere und Verunreinigungen zu entfernen.

Eine weitere Aufgabe besteht darin, unnötigen Stickstoffverbrauch zu verhindern, welcher dazu gebraucht würde, um feuchten Stickstoff durch trockenen Stickstoff zu ersetzen.

Die vorliegende Aufgabe wird erfindungsgemäss dadurch gelöst, dass ein Teilstrom des Trägergases mit einer Temperatur von 20-230°C dem Hauptstrom entnommen und durch eine mit Wasser beschickte Gaswaschkolonne so geführt wird, dass der Teilstrom des konditionierten Trägergases mit einem Taupunkt von 10-80°C (100% relative Feuchtigkeit) in den Hauptstrom des Trägergases zurückgeführt wird.

Ein wesentlicher Vorteil ist darin zu sehen, dass beim Einleiten des heissen Teilstroms des Trägergases in das Wasser beim Abkühlen zunächst alle auskondensierbaren und resublimierbaren Anteile, wie Oligomere, im Wasser abgeschieden werden. Gleichzeitig wird die Temperatur des so gereinigten Trägergases durch die Temperatur des Wassers in der Waschkolonne automatisch vorgegeben, womit auch der Taupunkt des Rückstromes zum Reaktor sehr genau eingestellt werden kann (Sättigung). Der Taupunkt im Reaktor selbst gleicht sich mit fortschreitender Prozessdauer der Kopftemperatur des Wäschers an.

Das hat den weiteren besonderen Vorteil, dass die Regelung sehr einfach zu bewerkstelligen ist. Im Wirbelschichtreaktor selbst kann somit über den Taupunkt auf sehr einfache Weise die Feuchtigkeit des Granulats während des gesamten Nachkondensationsprozesses unter konstanten Druckverhältnissen gesteuert werden.

Beim Eintritt des Trägergases mit einer Temperatur von 20-230°C, bevorzugt 40-200°C, in die Gaswaschkolonne wird dieses abgekühlt und gibt beim Schmelzspinnen störende Fremdstoffe, wie Monomere und Oligomere ab. Das austretende, gereinigte und mit Wasserdampf gesättigte Trägergas, weist beim Austritt aus der Gaswaschkolonne eine Temperatur von 10-80°C, insbesondere von 13-40°C, bevorzugt 13-30°C auf, was jeweils zahlenwertmässig mit dem Taupunkt übereinstimmt.

Damit nach der abgeschlossenen Nachkondensation, gemessen an der relativen Viskosität des Polymers, das heisse Polymergranulat die gewünschte Wassermenge aufzunehmen vermag, wird während der Abkühlphase des Granulats im Wirbelschichtreaktor, die Zufuhr des Trägergases aus dem konditionierten Teilstrom unterbrochen und nur der Hauptstrom bei abgestellter Heizung bzw. unter Kühlung weiter zirkuliert. Nach Erreichen der gewünschten Austragungstemperatur hat sich der Feuchtigkeitsgehalt des Polymers bereits so rasch einstellt, dass das Granulat sofort ausgetragen werden kann. Die Endfeuchte des Granulats beträgt, abhängig vom gefahrenen Taupunkt von 0,025 bis 0,08%, bevorzugt 0,03 bis 0,07%. Der jeweilig gewünschte Feuchtigkeitsgehalt des Granulats lässt sich auf diese Weise sehr genau über den Taupunkt regulieren.

Es wurde in überraschender Weise gefunden, dass die Granulatfeuchte am Ende des Nachkondensationsprozesses, d. h., nach der Kühlphase, nur vom Taupunkt im Trägergas zu Beginn der Abkühlphase abhängt. Der Taupunkt seinerseits hängt nur von den Bedingungen, insbesondere der Waschtemperatur in der Gaswaschkolonne ab.

Das erfindungsgemässe Verfahren soll anhand eines Schemas näher beschrieben werden. Es zeigen:
- Fig. 1: ein Verfahrensschema der Erfindung
- Fig. 2: Kurven des Verlaufs der Nachkondensation und Abkühlung nach dem erfindungsgemässen Verfahren

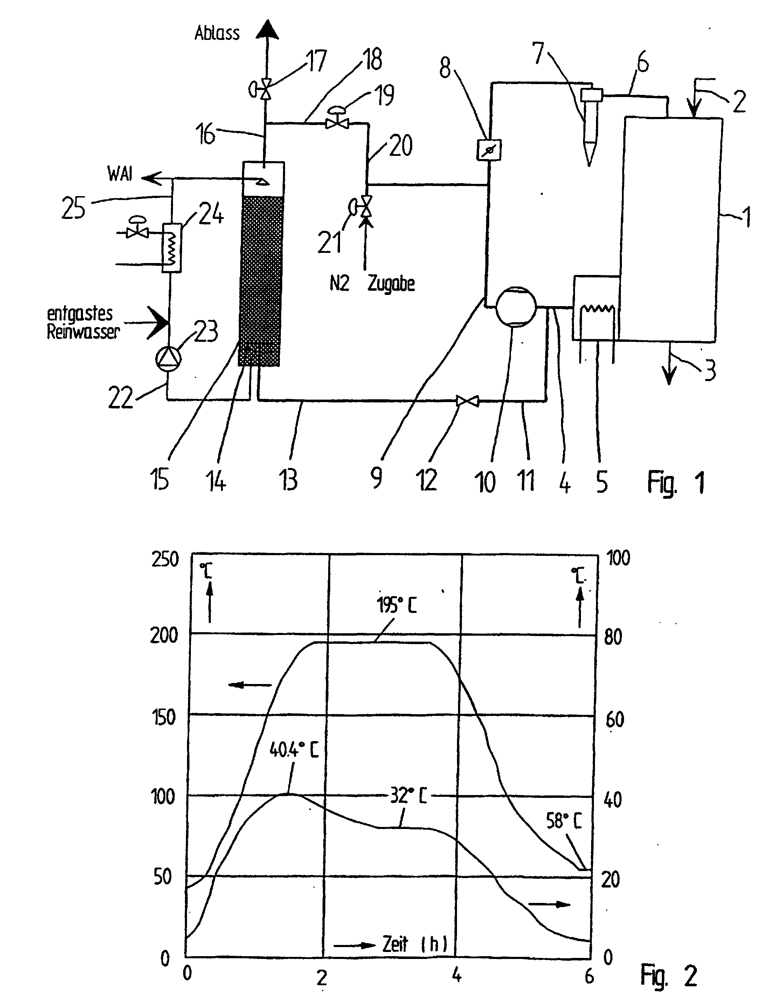

In Fig. 1 ist mit dem Bezugszeichen 1 ein Wirbelschichtreaktor bezeichnet. Der Wirbelschichtreaktor 1 ist mit einer Eintragsöffnung 2 für das zu behandelnde Polymer und einer Austrageöffnung 3 für das nachkondensierte Polymer versehen. Im unteren Teil des Wirbelschichtreaktors 1 ist eine Druckleitung 4 für die Zufuhr eines Trägergases über einen Wärmeaustauscher 5 vorgesehen. Der Abgang des Trägergases erfolgt im oberen Teil des Wirbelschichtreaktors 1 über eine Rohrleitung 6, einen Zyklonabscheider 7. Zwischen einem Rohrleitungsteil 9 und dem Wärmeaustauscher 5 ist ein Ventilator 10 installiert. In die Druckleitung 4 mündet eine weitere Leitung 11, die über ein Ventil 12 in einen Leitungsteil 13 führt, die mit einer Gasverteilungseinrichtung 14 an ihrem unteren Ende in einer Gaswäscherkolonne 15 mündet. Die Gaswäscherkolonne 15 weist in ihrem oberen Teil eine Leitung 16 auf, die von einem Regelventil 17 abgeschlossen wird. Ein Leitungsteil 18 führt von der Leitung 16 über ein weiteres Regelventil 19 und eine Leitung 20 in den Rohrleitungsteil 9 des Trägergasstromes. In der Leitung 20 ist ein Regelventil 21 für die Zugabe von Stickstoff vorgesehen. Zur Gaswaschkolonne 15 gehört ein temperaturregulierbarer Kühlwasserkreislauf, bestehend aus einer unteren Rohrleitung 22, einer Pumpe 23, einem Wärmeaustauscher 24 und einer oberen Rohrleitung 25.

In Fig. 2 sind die Kurven des Verlaufs der Granulattemperatur und des Taupunktes während der Aufheizung, Nachkondensation und Abkühlung nach dem erfindungsgemässen Verfahren dargestellt. Es ist die Granulattemperatur und der Taupunkt einer Nachkondensationsscharge mit einem Taupunkt-Sollwert von 32°C während der Hochtemperaturphase bis zum Austrag des Granulats gezeigt. Der besseren Übersicht wegen, gilt die linke Ordinate für die Kurve 1; die rechte Ordinate für die Kurve 2. Kurve 1 gibt die Granulattemperatur und Kurve 2 den Verlauf der Taupunkttemperatur wieder. Aus den Kurven ist ersichtlich, dass kurz bevor das Granulat seine maximale Temperatur von 195°C erreicht hat, der Taupunkt seine Höchstmarke von ca. 40°C bereits überschritten hat, danach abnimmt und bis zum Einleiten der Abkühlphase praktisch konstant weiterverläuft.

Im Betrieb ist der Wirbelschichtreaktor 1 mit Polyamid 6.6-Granulat mit einem Wassergehalt von höchstens 0,4% beschickt. Durch das Aufheizen gibt das feuchte Granulat-Polymer Wasser ab, wodurch der Taupunkt des Trägergases ansteigt. Dadurch kann der Taupunkt des Trägergases zunächst zu hoch sein. Ist dies der Fall, wird durch die Gaswaschkolonne dem Hauptkreislauf Wasser entzogen. Die Wirbelschicht wird mittels Trägergasumwälzung erzeugt, wobei der Ventilator 10 das Trägergas mit einem Überdruck über den Wärmeaustauscher 5 durch den nicht gezeigten Siebboden des Wirbelschichtreaktors 1 und das Granulat bläst. Der Druck baut sich nach dem Zyklonabscheider 7 ab, was auch etwa dem Vordruck des Ventilators 10 entspricht. Gleichzeitig wird ein Teilstrom des etwa 190°C aufweisenden Trägergases der Druckleitung 4 entnommen und über die Leitungen 11 und dem Leitungsteil 13 der Gasverteilungseinrichtung 14 zugeführt. Die Gasverteilungseinrichtung 14 begast das in der Gaswäscherkolonne enthaltene Wasser. Dabei wird das Trägergas von beispielsweise 190°C auf 40°C abgekühlt. Die Temperatur des Wassers in der Gaswäscherkolonne 15 wird über den Wärmeaustauscher 24 gesteuert, wobei der Gaswäscherkolonne über die Rohrleitung 22 das Wasser mittels der Pumpe 23 entnommen wird, durch den Wärmeaustauscher 24 geführt und im oberen Teil über die Rohrleitung 25 über eine Sprüheinrichtung der Gaswaschkolonne 15 wieder zugeführt wird. In der Gaswaschkolonne 15 werden Monomere und Oligomere abgeschieden. Das konditionierte Trägergas verlässt zwischen 13 und 40°C die Gaswaschkolonne 15 über die Leitung 16 und wird über die Leitung 20 dem Hauptkreislauf, der Leitung 9 vor dem Ventilator wieder zugeführt.

### Beispiel 1

4000 kg Polyamid 6.6-Granulat werden in einem Reaktor von 90 m³ Gesamvolumen auf 195°C unter Verwirbelung nach dem Zeitverlauf gemäss Fig. 2 aufgeheizt. Nun wird ein Teilstrom des Trägergases durch die Gaswaschkolonne hindurchgeleitet, wobei die Wassertemperatur 32°C beträgt. Die Prozesstemperatur wird während etwa 2 Stunden gehalten, während der sich der Taupunkt den gewünschten Wert von 32°C einstellt. Nun wird der Teilstrom abgestellt und abgekühlt. Während der Kühlphase wird das im Stickstoff enthaltene Wasser von PA 6.6 absorbiert. Nach dem Abkühlen beträgt die Endfeuchte des Granulates 0.055 % bei einer Genauigkeit von besser als 0.003 %.

### Beispiel 2

In Beispiel 2 wird die gleiche Menge Polyamid 6.6 Granulat auf 189°C, unter Verwirbeln, nach einem ähnlichen Zeitverlauf wie in Fig. 2 aufgeheizt. Während der konstanten Hochtemperaturphase pendelt sich der Taupunkt auf den gewünschten und von der Wäschertemperatur vorgegebenen Wert von 13°C ein. Danach wird abgekühlt. Es resultiert eine Endfeuchte im Granulat von 0,033 % mit einer Genauigkeit von besser als ± 0.003 %.

Die Ergebnisse sind in der folgende Tabelle zusammengefasst.

**Tabelle**

| Versuch Nr. | Taupunkt [°C] | Relative Viskosität [RV] | Feuchtigkeit [%] |
|---|---|---|---|
| 1 | 13.0 | 75.6 | 0.033 |
| 2 | 13.0 | 93.5 | 0.026 |
| 3 | 25.0 | 76.0 | 0.045 |
| 4 | 32.0 | 75.6 | 0.055 |
| 5 | 38.0 | 91.5 | 0.070 |

Aus der Tabelle ist ersichtlich, dass die Feuchtigkeit im Granulat in weiten Grenzen in einfacher Weise über den Taupunkt gesteuert werden kann. Die Viskosität hingegen wird durch den zeitlichen Verlauf der Granulattemperatur variiert.

Nach dem erfindungsgemässen Verfahren ist es erstmals möglich, die Nachkondensation und Konditionierung (Einstellen der gewünschten Feuchtigkeit im Granulat) in einem Verfahrensschritt durchzuführen. Die bei der Nachkondensation anfallenden gasförmigen Nebenprodukte sowie Staubpartikel werden auf einfache Weise laufend aus dem Verfahren entfernt. Insbesondere wird eine uniforme Verteilung der Feuchtigkeit im Granulat nur durch Einstellen des Feuchtigkeitsniveaus bei hohen Temperaturen erreicht. Des weiteren werden auch von der Betriebskostenseite erhebliche Einsparungen dadurch erzielt, dass der Stickstoff als Trägergas kontinuierlich rezirkuliert wird und nur geringe Verluste, die durch Undichtigkeit und Temperatureffekte auftreten können, gedeckt werden müssen.

Durch die Erfindung werden mehrere Verfahrensschritte bezüglich des Wasserhaushaltes des Polymers gleichzeitig während der Nachkondensation gelöst. Dadurch kann nicht nur auf eine Wasserzugabe vor dem Extruder verzichtet werden, sondern die Verfahrensstufen Nachkondensation, Trocknung, Feuchtekonditionierung des Granulats und teilweise Entfernung von Verunreinigungen werden gleichzeitig durchgeführt. Dadurch können auch erhebliche Mengen Stickstoff eingespart werden. Insgesamt wird mit der Erfindung das ganze Verfahren effizienter und wirtschaftlicher gestaltet.

## Patentansprüche

1. Verfahren zum einstufigen Nachkondensieren von Polykondensaten, insbesondere von Polyamid 6.6 - Granulat in einem Wirbelschichtreaktor (1) unter Verwendung von Stickstoff (N₂) als Trägergas, **dadurch gekennzeichnet, dass** ein Teilstrom des Trägergases mit einer Temperatur von 20-230°C dem Hauptstrom entnommen und durch eine mit Wasser beschickte Gaswaschkolonne (15) so geführt wird, dass der Teilstrom des konditionierten Trägergases mit einem Taupunkt von 10-80°C (100% relative Feuchtigkeit) in den Hauptstrom des Trägergases zurückgeführt wird.

2. Verfahren nach Anspruch 1, wobei es sich bei dem Polykondensat um ein Polyamid 6.6 Granulat handelt **dadurch gekennzeichnet, dass** am Ende der Nachkondensationsphase eine Abkühlphase erfolgt und in der Abkühlphase des Granulats, die Zufuhr des Teilstroms des Trägergases unterbrochen wird.

3. Verfahren nach den Ansprüchen 1 - 2, wobei es sich bei dem Polykondensat um ein Polyamid 6.6 Granulat handelt **dadurch gekennzeichnet, dass** nach der Abkühlphase das Granulat sofort ausgetragen wird und daß die Steuerung der Endfeuchte des Granulats beim Austrag über den Taupunkt im Trägergas erfolgt, wobei die gemessene Feuchtigkeit im Granulat mit einer Streuung von besser als ± 0.003 % gemessen wird.

## Claims

1. Process for single-stage postcondensation of polycondensates, especially of nylon-6,6 chip, in a fluidized bed reactor (1) by using nitrogen (N₂) as a carrier gas, **characterized in that** a fractional stream of the carrier gas is removed from the main stream at a temperature of 20-230°C and passed through a water-fed gas scrubber column (15) in such a way that the fractional stream of the conditioned carrier gas is returned into the main stream of the carrier gas at a dew point of 10-80°C (100% relative humidity).

2. Process according to Claim 1, wherein the polycondensate is nylon-6,6 chip, **characterized in that** the postcondensing phase is followed by a cooling phase and the feed of the fractional stream of the carrier gas is interrupted in the cooling phase of the chip.

3. Process according to Claims 1 to 2, wherein the polycondensate is nylon-6,6 chip, **characterized in that** the chip is immediately removed after the cooling phase and **in that** the final moisture content of the chip is controlled at the point of discharge, via the dew point in the carrier gas, the measured moisture content of the chip being measured to an accuracy of better than ± 0.003%.

## Revendications

1. Procédé de post-condensation en une seule étape de polycondensats, en particulier de granulé de polyamide 6.6, dans un réacteur à lit fluidisé (1) utilisant de l'azote (N₂) comme gaz porteur, **caractérisé en ce que** l'on soustrait du flux principal un flux partiel du gaz porteur, de température comprise entre 20 et 230 °C, et qu'on le fait passer dans une colonne de lavage des gaz (15), alimentée en eau, de manière à renvoyer dans le flux principal du gaz porteur le flux partiel du gaz porteur conditionné, qui possède un point de rosée compris entre 10 et 80 °C (100 % d'humidité relative).

2. Procédé selon la revendication 1 dans lequel le polycondensat est un granulé de polyamide 6.6, **caractérisé en ce que**, à la fin de la phase de post-condensation intervient une phase de refroidissement et **en ce que**, pendant la phase de refroidissement du granulé, on interrompt l'admission du flux partiel du gaz porteur.

3. Procédé selon les revendications 1 - 2 dans lequel le polycondensat est un granulé de polyamide 6.6, **caractérisé en ce que**, après la phase de refroidissement, on décharge immédiatement le granulé et **en ce que** l'humidité finale du granulé lors du déchargement est commandée par l'intermédiaire du point de rosée du gaz porteur, l'humidité mesurée du granulé étant mesurée avec une dispersion meilleure que ± 0,003 %.
